# EUROPÄISCHE PATENTSCHRIFT

(11) **EP 1 634 770 B1**
(45) Veröffentlichungstag und Bekanntmachung des Hinweises auf die Patenterteilung: **13.10.2010**
(21) Anmeldenummer: 05017358.2
(22) Anmeldetag: 10.08.2005
(51) Int. Cl.: B60Q 1/115

(54) **Verfahren zur Leuchtweitenregelung eines Kraftfahrzeug-Scheinwerfers**
Method for controlling the lighting distance of a vehicle headlamp
Procédé de réglage de la portée d'un phare de véhicule

(30) Priorität: 14.09.2004 DE 102004044261
(43) Veröffentlichungstag der Anmeldung: 15.03.2006
(73) Patentinhaber: GM Global Technology Operations, Inc., Detroit, MI 48265-3000 (US)
(72) Erfinder: Schieck, Rudi, 55232 Alzey (DE)
(74) Vertreter: Daniel, Ulrich W.P.

(56) Entgegenhaltungen:
- EP-A- 1 334 869
- DE-A1- 4 024 916
- DE-U1- 29 824 081
- US-A1- 2003 039 124

## Beschreibung

Die Erfindung bezieht sich auf ein Verfahren zur Leuchtweitenregelung eines Kraftfahrzeug- Scheinwerfers, wobei ein Steuergerät Sensorsignale verarbeitet und ein Regelsignal an ein Betätigungselement leitet, das in Abhängigkeit von dem Regelsignal die Neigung des Kraftfahrzeugscheinwerfers ändert.

Aus der Praxis ist es bekannt, dass eine Änderung der Neigung eines Kraftfahrzeuges bzw. des Aufbaus des Kraftfahrzeuges dazu führt, dass entweder die Fahrbahn vor dem Kraftfahrzeug nicht ausreichend weit ausgeleuchtet wird, da der karosserieseitig fest eingebaute Scheinwerfer mit seiner optischen Längsachse z. B. beim Bremsen nach unten geneigt ist, oder eutgegenkommender Verkehr z. B. beim Beschleunigen durch die nach oben strahlenden Scheinwerfer geblendet wird. Beides führt zu einer erheblichen Verkehrsgefährdung. Um dies zu vermeiden sind dynamische Systeme zur Regelung der Leuchtweite eines Kraftfahrzeug-Scheinwerfers bekannt.

Bei dynamischen Systemen zur Regelung der Leuchtweite des Kraftfahrzeug-Scheinwerfers, insbesondere bei Kraftfahrzeug-Scheinwerfern mit Xenon-Licht, erfolgt die Anpassung an Brems- und Beschleunigungszustände des Kraftfahrzeuges selbsttätig während der Fahrt mittels zumindest einem Steuergerät und zusätzlicher Sensorik. Hierbei wird von Sensoren an den Achsen und/oder an den Federn bzw. Dämpfern die Neigung der Fahrzeugkarosserie erfasst. Bei neutralem Fahrzustand nehmen die Scheinwerfer eine Ausgangsposition ein. Die Sensortechnik ermöglicht es, das Steuergerät in die Sensorik zu integrieren.

Bei statischen Kraftfahrzeug-Scheinwerfer- Systemen wird vom Fahrer über ein Stellpotentiometer in einer Armaturentafel die Leuchtweite der Kraftfahrzeug-Scheinwerfer der jeweiligen Zuladung oder Passagieranzahl des Kraftfahrzeuges angepasst. Statische Kraftfahrzeug-Scheinwerfer-Systeme können durch die Nutzung des Parameters Fahrzeuggeschwindigkeit dynamischen Charakter dadurch erhalten, dass aus dem Geschwindigkeitssignal die Beschleunigung des Kraftfahrzeuges abgeleitet wird, die dann ein Maß für die Scheinwerfereinstellung ist.

Allgemein bekannt sind darüber hinaus Kraftfahrzeug-Scheinwerfer-Systeme, die die Möglichkeit unterstützen, bei konstanter Autobahnfahrt, z.B. ab 120 km/h, die Leuchtweite eines Scheinwerfers leicht anzuheben, ohne den Gegenverkehr zu blenden.

Aus der DE 40 24 916 A1 ist es gattungsgemäß bekannt, die Leuchtweite eines Kraftfahrzeug-Scheinwerfers in Abhängigkeit von Neigungssensorsignalen zu steuern. Dazu sind an der Vorder- und/oder der Hinterachse eines Kraftfahrzeuges Sensoren installiert, die die Eintauchtiefe der jeweiligen Dämpfungssysteme registrieren, die einen Aufschluss über die Neigung des Kraftfahrzeuges bzw. des Aufbaus des Kraftfahrzeuges geben. Die Neigung ändert sich in Abhängigkeit von der Beladung bzw. der Passagierzahl, den Fahrbahnunebenheiten, dem Abbremsen oder Beschleunigen, der Steigung oder dem Gefälle. Ein Steuergerät verarbeitet diese Sensorsignale und leitet ein entsprechendes Regelsignal an ein Betätigungselement weiter, das die Neigung der Kraftfahrzeug-Scheinwerfer ändert, um eine gleich bleibende Ausleuchtung der Fahrbahn zu erhalten. Dabei können entweder die Scheinwerfer insgesamt oder nur die Reflektoren der Scheinwerfer in gewünschter Weise von hierzu geeigneten Betätigungselementen geneigt werden.

Im Weiteren offenbart die DE 199 30 084 A1 einen Kraftfahrzeug-Scheinwerfer, bei dem zusätzlich zu den Signalen von Neigungssensoren weitere Parameter des Kraftfahrzeuges zur Vorausberechnung der zu erwartenden Neigung des Kraftfahrzeuges verwendet werden. Somit kann der Scheinwerfer schneller auf die eintretende Neigung eingestellt werden. Als Parameter werden hier unter anderem die Stellung der Drosselklappe des Motors, die angesaugte Luftmenge im Motor oder die Geschwindigkeit des Kraftfahrzeuges gemeinsam mit dem Lenkeinschlag verwendet.

Darüber hinaus zeigt die DE 101 45 923A1 ein Verfahren und eine Vorrichtung zur Leuchtweitenregelung an einem Kraftfahrzeug, wobei aus der elektronischen Bremskraftverteilung eine zu erwartende Neigung des Fahrzeugaufbaus und damit ein Regelsignal für ein Stellorgan eines Scheinwerfers ermittelt wird. Von dem Steuergerät eines Antiblockiersystems werden Signale bezüglich der auftretenden Bremskräfte an eine Steuereinheit für die Scheinwerferneigung übermittelt, wobei erst in der Steuereinheit die Ermittlung eines entsprechenden Steuersignals zum Ausgleich der Fahrzeugneigung erfolgt.

Ferner offenbart die EP 03 899 156 A2 eine Vorrichtung zur statischen automatischen Leuchtweitenregelung für Kraftfahrzeuge mit Sensoren an den Achsen eines Kraftfahrzeuges, deren Signale in einen Speicher eingelesen werden und die gespeicherten Werte in einem festlegbaren zeitlichen Abstand mit aktuellen Signalen verglichen werden. Bei dieser Vorrichtung sind zusätzliche Sensoren an den Achsen notwendig und außerdem ist durch den getakteten Vergleich der Signale keine Echtzeit-Anpassung der Leuchtweite der Scheinwerfer möglich.

Schließlich zeigt die DE 297 20 961 U1 eine Vorrichtung zur Leuchtweitenregelung, wobei die Leuchtweitenregelung von der momentanen Geschwindigkeit des Kraftfahrzeuges abhängig ist.

Es ist Aufgabe der Erfindung, ein Verfahren zur Leuchtweitenregelung der eingangs genannten Art zu schaffen, das in einfacher und ökonomischer Weise in einem Kraftfahrzeug durchführbar ist, ohne dass an einem Steuergerät aufwändige Nachrüstarbeiten anfallen und bei dem keine zusätzlichen Sensoren, beispielsweise an den Achsen oder den Dämpfungssystemen des Kraftfahrzeugs, notwendig sind.

Erfindungsgemäß wird die Aufgabe dadurch gelöst, dass dem Steuergerät ein Geschwindigkeitssignal und ein Lenkungskraftsignal zugeleitet werden, um ein entsprechendes Regelsignal an das Betätigungselement für den Scheinwerfer zu errechnen und auszugeben.

Der Kerngedanke der Erfindung besteht darin, dass einem an sich bekannten Steuergerät, das üblicherweise Sensorsignale von beispielsweise Neigungs- oder Dämpfungssensoren an den Fahrzeugachsen empfängt und aus diesen Signalen die aktuelle Neigung des Aufbaus des Kraftfahrzeugs ermittelt, um entsprechende Regelsignale an die Betätigungselemente auszugeben, gerade keine derartigen Sensorsignale zugeleitet werden. Vielmehr werden dem bekannten und in seinem Aufbau im Wesentlichen unveränderten Steuergerät lediglich ein Geschwindigkeitssignal und ein Lenkungskraftsignal zugeleitet. Das Geschwindigkeitssignal steht bei modernen Kraftfahrzeugen zur Weiterleitung an ein zentrales Steuergerät sowie zur Anzeige an einem Anzeigeinstrument zur Verfügung. Ebenso steht ein Lenkungskraftsignal, z. B. des Servomotors, mit dem die lenkenden Räder in Abhängigkeit des Lenkradeinschlags in die gewünschte Stellung gedreht werden, zur Verfügung.

Es ist dem Fachmann bekannt, dass bei langsamer Fahrzeuggeschwindigkeit eine wesentlich größere Kraft von z. B. dem Servomotor aufgewendet werden muss, um die lenkenden Räder des Kraftfahrzeuges im gewünschten Winkel einzuschlagen, als bei einer höheren Fahrzeuggeschwindigkeit, da bei der höheren Geschwindigkeit dem Einschlagen der Räder wesentlich geringere Reibungskräfte entgegen wirken. Ebenso ist es bekannt, dass bei einem leeren Kraftfahrzeug, unabhängig von der aktuellen Geschwindigkeit, jeweils geringere Kräfte notwendig sind, um die Räder im gewünschten Winkel einzuschlagen, als beispielsweise bei einem voll beladenen Kraftfahrzeug, da auf jedem Rad weniger Gewicht lastet und somit ebenfalls die Reibungskräfte geringer sind. Somit ist es möglich, aus der aktuellen Fahrzeuggeschwindigkeit sowie der zum Einschlagen der Räder notwendigen Kraft einen Rückschluss auf die momentane Zuladung bzw. das Gesamtgewicht des Kraftfahrzeugs zu ziehen. Anhand dieses ermittelten Gewichts kann bei bekannten Kennlinien des Dämpfungssystems auf das jeweilige Eintauchen oder Einfedern der verschiedenen Federn und Dämpfer rückgeschlossen werden, die in einer gegenüber dem unbeladenen Kraftfahrzeug veränderten Neigung des Aufbaus oder der Karosserie führen. Diese Neigung der Karosserie kann bei starr eingebauten Scheinwerfern jedoch dazu führen, dass beispielsweise bei voller Zuladung die Scheinwerfer schräg nach oben leuchten und somit entgegenkommende Verkehrsteilnehmer geblendet werden würden. Die Neigung der Karosserie kann von dem Steuergerät anhand des Geschwindigkeitssignals sowie des Lenkungskraftsignals ermittelt werden, um ein entsprechendes Regelsignal an das Betätigungselement für den oder die Scheinwerfer zu errechnen und auszugeben. Dementsprechend werden die Scheinwerfer korrespondierend zu der ermittelten Zuladung des Kraftfahrzeugs derart geneigt, dass sie in die gewünschte Richtung weisen bzw. in einem gewünschten Winkel gegen die Horizontale geneigt sind, um unter anderem entgegenkommende Verkehrsteilnehmer nicht zu blenden. Hierbei können entweder die gesamten Scheinwerfer oder nur deren Reflektoren verschwenkt werden.

Es versteht sich, dass ausgehend von dieser Stellung der Scheinwerfer, die aus dem Geschwindigkeitssignal und dem Lenkungskraftsignal ermittelt wird, nachfolgend während des Betriebs des Kraftfahrzeugs auch eine dynamische Leuchtweitenregelung erfolgen kann, die beispielsweise die bei Brems- und Beschleunigungsvorgängen auftretenden Änderungen der Neigung der Karosserie des Kraftfahrzeugs ausgleicht. Ebenso kann bei längerer Fahrt mit konstanter Geschwindigkeit in bekannter Weise die Leuchtweite durch leichtes Anheben der Scheinwerfer vergrößert werden.

Der Vorteil der Erfindung liegt darin, dass lediglich zwei bereits im Kraftfahrzeug vorhandenen Signale dem Steuergerät zur Weiterverarbeitung zugeleitet werden müssen, um die durch eine veränderte Zuladung beeinflusste Neigung der Karosserie zu erfassen und die Scheinwerfer entsprechend zu verstellen. Vorzugsweise sind die Sensoren für die Geschwindigkeit und die Lenkungskraft über dem Fachmann bekannte Datenbus-Architekturen mit dem Steuergerät oder einem zentralen Steuergerät zur Steuerung aller Funktionen im Kraftfahrzeug verbunden. Insbesondere sind keine zusätzlichen in der Anschaffung teuren Neigungssensoren an Achsen oder Dämpfern notwendig. Die hard- und/oder softwaremäßige Implementierung des Verfahrens im Steuergerät ist dem Fachmann möglich.

Nach einer vorteilhaften Ausgestaltung ist das Lenkungskraftsignal ein Lenkungsstrom, mit dem der Servomotor zum Verstellen der lenkenden Räder betrieben wird, wobei anhand der Stromstärke auf die zum Einlenken der Räder notwendige Kraft geschlossen werden kann.

Zur Vereinfachung der Ermittlung der Zuladung des Kraftfahrzeugs werden beispielsweise mit einem Vorserienfahrzeug Testfahrten mit unterschiedlichen Zuladungen, vom Leergewicht bis zum maximal zulässigen Gesamtgewicht, vorgenommen. Dabei werden bei unterschiedlichen Geschwindigkeiten unterschiedliche Lenkeinschläge gewählt und die dazu erforderlichen Lenkungskräfte erfasst. Somit kann bei bekannten Zuladungen und Geschwindigkeiten diesen Werten jeweils eine Lenkungskraft zugeordnet werden. Die Messwerte für die Lenkungskräfte bei unterschiedlichen Geschwindigkeiten werden anschließend in einem Speicher des Steuergeräts abgespeichert. Im normalen Betrieb des Kraftfahrzeugs werden dann diese Werte aus dem Speicher ausgelesen und mit den aktuellen Werten des Geschwindigkeitssignals und des Lenkungskraftsignals verglichen und daraus die entsprechende Zuladung abgeleitet. Somit ist in einfacher und ohne großen Rechenaufwand durchführbarer Weise die Ermittlung der Neigung der Karosserie möglich, um ein entsprechendes Regelsignal auszugeben. Insbesondere entfällt hierbei die Notwendigkeit von Berechnungen, die vom Steuergerät durchgeführt werden müssen, um aus den Signalwerten die Karosserieneigung zu ermitteln.

In Ausgestaltung werden weitere dynamische Signale vom Steuergerät verarbeitet. Diese sind insbesondere ein Temperaturparameter und/oder ein Feuchtigkeitsparameter und/oder ein EPS-Paramter ("Elektric Power Steering") bzw. ein EHPS-Parameter ("Elektrohydraulic Power Steering") und/oder ein ABS-Parameter und/oder ein Motorlast-Parameter.

In gleicher Weise können auch folgende fahrzeugsspezifische Parameter vom Steuergerät berücksichtigt werden, die die Achslast und somit den Beladungszustand kennzeichnen oder beeinflussen: Kraftfahrzeug-Art bzw. Karosserieform, z. B. Limousine, Caravan; Zahl und Art der Achsen, z. B. angetriebene Hinterachse, sowie ob eine Anhängerzugvorrichtung vorhanden ist; Art und Größe der Reifen, da die Reifenbreite die Größe der Reibung zwischen Fahrbahn und Reifen bestimmt; Motortyp z. B. 4-Zylinder, 6-Zylinder; Getriebetyp, z. B. MT, AT, CVT; Federkennlinien der Dämpfungssysteme sowie weitere im Betrieb unveränderliche kraftfahrzeugspezifische Größen, die jede für sich die Neigung des Kraftfahrzeugs bei unterschiedlichen Fahrzuständen beeinflussen.

Um Änderungen beispielsweise der dynamischen Parameter berücksichtigen zu können, werden bevorzugt die Signale differenziert, um aus den Änderungen Rückschlüsse auf die Neigung der Karosserie zu ziehen, die beispielsweise durch eine Geschwindigkeitsänderung wie Bremsen oder Beschleunigen verursacht wird.

Vorzugsweise wird von dem Steuergerät eine Scheinwerferstellung unter Zugrundelegung zumindest eines der vorstehenden Parameter ermittelt, die bei der jeweiligen Zuladung bzw. der jeweiligen Passagieranzahl eine neutrale Stellung ist, um einerseits die Fahrbahn weit genug auszuleuchten und andererseits ein Blenden des Gegenverkehrs zu vermeiden. Dies entspricht einer statischen Regelung der Leuchtweite.

Zweckmäßigerweise wird der Kraftfahrzeugscheinwerfer beim Ausschalten und/oder beim Einschalten der Zündung des Kraftfahrzeugs in eine Grundstellung geneigt, z. B. seine unterste Stellung mit der geringsten Leuchtweite. Wird der Scheinwerfer beim Starten des Kraftfahrzeugs eingeschaltet, ist ein Blenden von entgegenkommenden Verkehr ausgeschlossen, da noch keine Parameter über das Fahrverhalten des Kraftfahrzeugs, aus dem auf dessen aktuelle Neigung geschlossen werden kann, vorliegen. Nach dem Anfahren wird dann anhand des Geschwindigkeitssignals und des Lenkungskraftsignals die Neigung der Scheinwerfer eingestellt.

Nach einer Weiterbildung erfolgt die Verarbeitung der Sensorsignale in einem Steuergerät eines BCMs. Mit einem derartigen BCM ("Body Control Module") wird die Neigung des Aufbaus des Kraftfahrzeuges kontinuierlich während der Fahrt überwacht, um, insbesondere bei kritischen Fahrtsituationen in engen und zu schnell gefahrenen Kurven, steuernd und regelnd in das Fahrgeschehen einzugreifen, um eine zu große Neigung des Fahrzeugaufbaus zu unterbinden. Die in diesem BCM vorliegenden Werte für die Neigung des Aufbaus des Kraftfahrzeuges werden dementsprechend als simulierte Sensorsignale an das Steuergerät für die dynamische Leuchtweitenregelung übermittelt. Es versteht sich, dass ein derartiges BCM- Steuergerät hard- und/oder softwaremäßig derart ausgelegt ist, dass aus den verschiedensten Parametern im Kraftfahrzeug die zu erwartende Neigung des Aufbaus abgeleitet werden kann, um stets eine optimale Höhenanpassung der Scheinwerfer zu erhalten. Hierbei werden von dem BCM insbesondere keine Sensorsignale von den Achsen des Kraftfahrzeuges verwendet. In gleicher Weise kann die Simulation der Sensorsignale in einem Gateway, d. h. einem Umsetzer oder auch in dem Leuchtweitensteuergerät selbst, erfolgen. Ein derartiges Gateway überträgt die Daten von einem Datenbus im Kraftfahrzeug zu einem anderen Datenbus. Bevorzugt sind die vorstehend genannten Steuergeräte sowie das Steuergerät zur Leuchtweitenregelung und alle anderen Sensoren im Kraftfahrzeug über dem Fachmann bekannte Bus-Systeme miteinander verknüpft, um entsprechende Daten austauschen zu können. Derartige Busse können bekannte "Private-Busse"(CAN, LIN) sein oder ein HS-CAN-Standardbus.

Es versteht sich, dass die vorstehend genannten Merkmale nicht nur in der jeweils angegebenen Kombination, sondern auch in anderen Kombinationen verwendbar sind. Der Rahmen der vorliegenden Erfindung ist nur durch die Ansprüche definiert.

## Patentansprüche

1. Verfahren zur Leuchtweitenregelung eines Kraftfahrzeug-Scheinwerfers, wobei ein Steuergerät Sensorsignale verarbeitet und ein Regelsignal an ein Betätigungselement leitet, das in Abhängigkeit von dem Regelsignal die Neigung des Kraftfahrzeugscheinwerfers ändert, **dadurch gekennzeichnet, dass** dem Steuergerät ein Geschwindigkeitssignal und ein Lenkungskraftsignal zugeleitet werden, um das Regelsignal an das Betätigungselement für den Scheinwerfer zu errechnen und auszugeben.

2. Verfahren nach Anspruch 1, **dadurch gekennzeichnet, dass** das Lenkungskraftsignal ein Lenkungsstrom ist.

3. Verfahren nach Anspruch 1 oder 2, **dadurch gekennzeichnet, dass** im Steuergerät die Signal mit abgespeicherten Werten verglichen werden.

4. Verfahren nach einem der Ansprüche 1 bis 3, **dadurch gekennzeichnet, dass** weitere dynamische Signale vom Steuergerat verarbeitet werden, insbesondere ein Temperaturparameter und/oder ein Feuchtigkeitsparameter und/oder ein EPS-, EHPS- und/oder ein ABS-Parameter und/oder ein Motorlastparameter.

5. Verfahren nach einem der Ansprüche 1 bis 4, **dadurch gekennzeichnet, dass** weitere statische Parameter des Kraftfahrzeugs verwendet werden, insbesondere die Reifengroße und/oder das Fahrzeuggewicht und/oder seine Zuladung und/oder die Fahrzeugart und/oder die Motor- und Getriebeart.

6. Verfahren nach einem der Ansprüche 1 bis 5, **dadurch gekennzeichnet, dass** ein oder mehrere Parameter differenziert werden.

7. Verfahren nach einem der Ansprüche 1 bis 6, **dadurch gekennzeichnet, dass** der Kraftfahrzeug- Scheinwerfer beim Ein und/oder Ausschalten einer Zündung des Kraftfahrzeugs in eine Grundstellung geneigt wird.

8. Verfahren nach einem der Ansprüche 1 bis 7, **dadurch gekennzeichnet, dass** die Signale in einem BCM und/oder einem Gateway und/oder einem Leuchtweitensteuergerät verarbeitet werden, insbesondere alle Komponenten miteinander über einen Datenbus in Verbindung stehen.

## Claims

1. A method for controlling the lighting distance of a vehicle headlamp, with a control device processing sensor signals and conducting a control signal to an actuating element which changes the inclination of the vehicle headlamp depending on the control signal, **characterized in that** the control device is supplied with a speed signal and steering-force signal in order to calculate and output the control signal to the actuating element for the headlamp.

2. A method according to claim 1, **characterized in that** the steering-force signal is a steering current.

3. A method according to claim 1 or 2, **characterized in that** the signals are compared with the stored values in the control device.

4. A method according to one of the claims 1 to 3, **characterized in that** further dynamic signals are processed by the control device, especially a temperature parameter and/or a humidity parameter and/or an EPS, EHPS and/or ABS parameter and/or an engine-load parameter.

5. A method according to one of the claims 1 to 4, **characterized in that** further static parameters of the motor vehicle are used, especially the tire size and/or the vehicle weight and/or its load and/or the type of vehicle and/or the type of engine and transmission.

6. A method according to one of the claims 1 to 5, **characterized in that** one or several parameters are differentiated.

7. A method according to one of the claims 1 to 6, **characterized in that** the vehicle headlamp is inclined to a basic position when the ignition is switched on and/or switched off.

8. A method according to one of the claims 1 to 6, **characterized in that** the signals are processed in a BCM and/or a gateway and/or lighting-distance control device, and especially all components are in connection with one another via a data bus.

## Revendications

1. Procédé de réglage de la portée d'un phare de véhicule, sachant qu'un dispositif de commande traite des signaux de capteur et achemine un signal de régulation sur un élément d'actionnement, qui modifie l'inclinaison du phare du véhicule en fonction du signal de régulation, **caractérisé en ce qu'**un signal de vitesse et un signal de force de direction sont transmis au dispositif de commande pour calculer et délivrer le signal de régulation sur l'élément d'actionnement pour le phare.

2. Procédé selon revendication 1, **caractérisé en ce que** le signal de force de direction est un courant de direction.

3. Procédé selon revendication 1 ou 2, **caractérisé en ce que** dans le dispositif de commande, les signaux sont comparés à des valeurs enregistrées.

4. Procédé selon l'une des revendications 1 à 3, **caractérisé en ce que** d'autres signaux dynamiques du dispositif de commande sont traités, en particulier un paramètre de température, et/ou un paramètre d'humidité et/ou un paramètre EPS (Electric Power Steering), EHPS (Electrohydraulic Power Steering) et/ou ABS et/ou un paramètre de charge de moteur.

5. Procédé selon l'une des revendications 1 à 4, **caractérisé en ce que** d'autres paramètres statiques du véhicule sont utilisés, en particulier la taille des pneus et/ou le poids du véhicule, et/ou son chargement, et/ou le type de véhicule et/ou le type de moteur et le type de réducteur.

6. Procédé selon l'une des revendications 1 à 5 **caractérisé en ce qu'**un ou plusieurs paramètres sont différenciés.

7. Procédé selon l'une des revendications 1 à 6, **caractérisé en ce que** le phare du véhicule est incliné dans une position de base en activant et/ou désactivant un allumage du véhicule.

8. Procédé selon l'une des revendications 1 à 7 **caractérisé en ce que** les signaux sont traités dans un BCM et/ou dans un gateway et/ou dans un dispositif de commande de portée de phare, en particulier tous les composants sont en contact les uns avec les autres à travers un bus de données.
